# EUROPEAN PATENT APPLICATION

(11) **EP 4 772 366 A1**
(43) Date of publication of application: **08.07.2026**
(21) Application number: 24882028.4
(22) Date of filing: 05.09.2024
(51) Int. Cl.: B60K 1/00, B60L 9/18, B60L 53/22

(54) **POWER CONVERSION DEVICE**

(30) Priority: 27.10.2023 JP 2023184658
(71) Applicant: AISIN CORPORATION, Kariya-shi, Aichi 448-8650 (JP)
(72) Inventor: MUTSUURA Keita, Kariya-shi, Aichi 448-8650 (JP); TAKEMOTO Keisuke, Kariya-shi, Aichi 448-8650 (JP); SUGIMOTO Noriaki, Kariya-shi, Aichi 448-8650 (JP); HANAMURA Takuya, Kariya-shi, Aichi 448-8650 (JP); HAGITA Kazuhiro, Kariya-shi, Aichi 448-8650 (JP)
(74) Representative: Kramer Barske Schmidtchen Patentanwälte PartG mbB
(86) International application number: PCT/JP2024/031821
(87) International publication number: WO 2025/088911

(57) **Abstract**

A power conversion device is a power conversion device provided in a vehicle drive device that transmits driving force of a traveling motor to a wheel, the power conversion device includes a plurality of conversion modules each of which is disposed in each of a plurality of layers overlapping each other in a vertical direction, a plurality of the conversion modules respectively arranged in the layers have a relatively larger weight from the layer on an upper side toward the layer on a lower side, and among a plurality of electronic components constituting the conversion module in the same layer, the electronic component having a relatively large weight is disposed in a gravity center region in the layer on the lower side.

## Description

### TECHNICAL FIELD

The present disclosure relates to a power conversion device.

### BACKGROUND ART

Patent Literature 1 describes, as a power conversion device, a power supply unit capable of converting power in a power device mounted on a vehicle. The power supply unit includes a current path, a housing, an AC charger, a DC relay, a main DC/DC converter, a sub DC/DC converter, a charge integration ECU, and the like.

Patent Literature 1 describes a configuration in which the main DC/DC converter and the sub DC/DC converter, which are lighter than the AC charger, are arranged above the AC charger in the housing. That is, a technique is disclosed in which a lightweight relay or the like is disposed in the upper portion of the housing, and the heaviest AC charger is disposed in the lower portion of the housing.

### CITATION LIST

### PATENT LITERATURE

Patent Literature 1: JP 2023-567 A

### SUMMARY OF INVENTION

### TECHNICAL PROBLEMS

A small and high-performance power conversion system is required with the improvement in vehicle performance in a hybrid electric vehicle (HEV), a plug-in hybrid electric vehicle (PHEV), a battery electric vehicle (BEV), and the like that can travel by electric power.

As described above, the vehicle that can travel by electric power often employs a wheel drive device in which an electric motor, a reduction gear, and the like are housed in a case. In addition, a vehicle including a wheel drive device with such a configuration requires a power conversion device that supplies power to an electric motor housed in the wheel drive device.

In the power conversion device, for example, one package of high-voltage components has been developed, and power supply modules such as an inverter, a DC-DC converter, and a charger (OBC) as the components include heavy components such as a filter and a transformer, and it is also necessary to consider the balance of the center of gravity of the entire power conversion device.

That is, considering a configuration of arranging a plurality of electronic components constituting the power conversion device in the housing, in a case where a relatively heavy electronic component among the electronic components housed in the housing is disposed at a position deviated in plan view, the position of an end portion of the housing becomes the center of gravity, and the stability of the housing is impaired.

In view of such a problem, Patent Literature 1 attempts to achieve weight balance in a vertical direction by lowering the position of the center of gravity, but there is room for improvement in weight balance in a planar direction.

For this reason, a power conversion device having good weight balance is required.

### SOLUTIONS TO PROBLEMS

A characteristic configuration of a power conversion device according to the present invention includes a power conversion device provided in a vehicle drive device that transmits driving force of a traveling motor to a wheel, the power conversion device including a plurality of conversion modules each of which is disposed in each of a plurality of layers overlapping each other in a vertical direction, a plurality of the conversion modules respectively arranged in the layers have a relatively larger weight from the layer on an upper side toward the layer on a lower side, and among a plurality of electronic components constituting the conversion module in a same layer, the electronic component having a relatively large weight is disposed in a gravity center region in the layer on a lower side.

According to this configuration, in the plurality of conversion modules, the weight is relatively larger toward the lower layer than the upper layer, and thus the center of gravity of the power conversion device can be disposed at a lower position. Furthermore, in the conversion module of the lower layer, the electronic component having a relatively large weight is disposed in the gravity center region. As a result, even if the lower layers are a plurality of conversion modules, it is also possible to set the center of gravity in any region in plan view by disposing an electronic component having a large weight in the gravity center region. Therefore, the power conversion device with a good weight balance is configured.

### BRIEF DESCRIPTION OF DRAWINGS

FIG. 1 is a longitudinal sectional view of a vehicle drive device that houses a conversion module.
FIG. 2 is a perspective view of a power conversion device including an inverter.
FIG. 3 is an exploded perspective view of the power conversion device.
FIG. 4 is a plan view illustrating a gravity center position of the power conversion device.
FIG. 5 is a longitudinal sectional view illustrating the gravity center position and a gravity center height of the power conversion device.
FIG. 6 is a cooling circuit diagram illustrating a coolant flow path and a refrigerant flow path.
FIG. 7 is a power conversion circuit diagram of the power conversion device.
FIG. 8 is an exploded perspective view of a vehicle drive device and a housing according to another embodiment (e).

### DESCRIPTION OF EMBODIMENTS

Hereinafter, embodiments of a power conversion device B according to the present disclosure will be described with reference to the drawings. In the present embodiment, the power conversion device B has a plurality of conversion modules arranged in a stacked state in a vertical direction, but the number of conversion modules and specific example arrangements of electronic components constituting the conversion modules are not limited to the following embodiments, and various modifications can be made without departing from the gist thereof.

### [Basic Configuration]

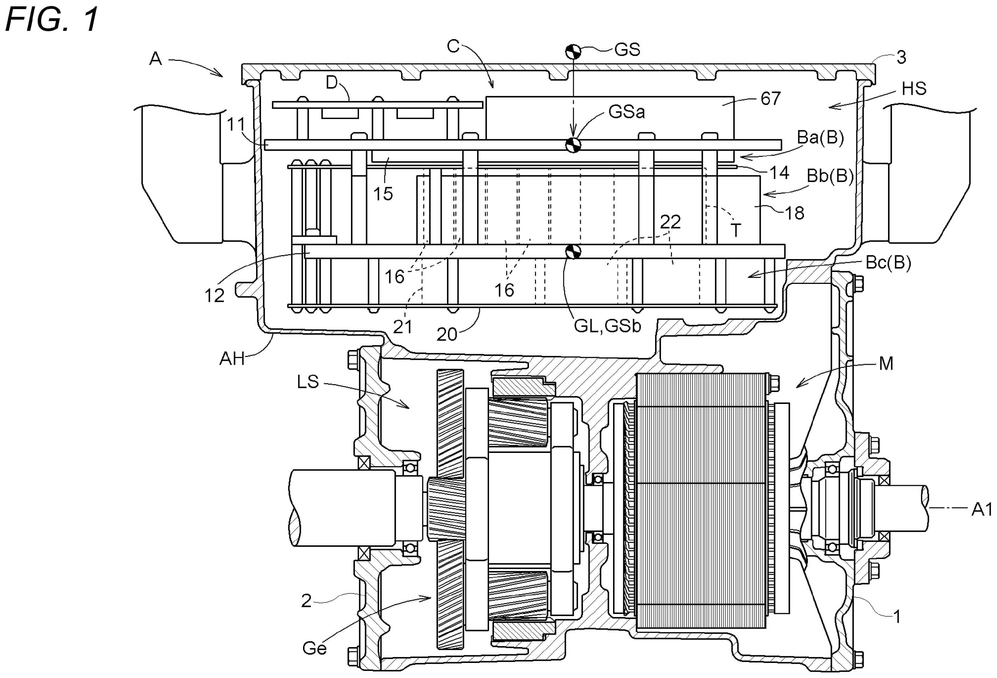

FIG. 1 illustrates a vehicle drive device A that transmits driving force of a traveling motor M to wheels (not illustrated). The vehicle drive device A houses the traveling motor M, a gear mechanism Ge that decelerates the driving force of the traveling motor M and transmits the driving force to driving wheels, the power conversion device B, and an inverter C in a housing AH.

Since the vehicle drive device A is provided in a vehicle in the vertical relationship illustrated in FIG. 1, the vertical relationship will be described with reference to the vertical direction illustrated in FIG. 1 in the present embodiment. In addition, FIG. 1 illustrates a longitudinal section of the vehicle drive device A as viewed in a front-rear direction, and the lateral direction in FIG. 1 is a width direction of a vehicle body.

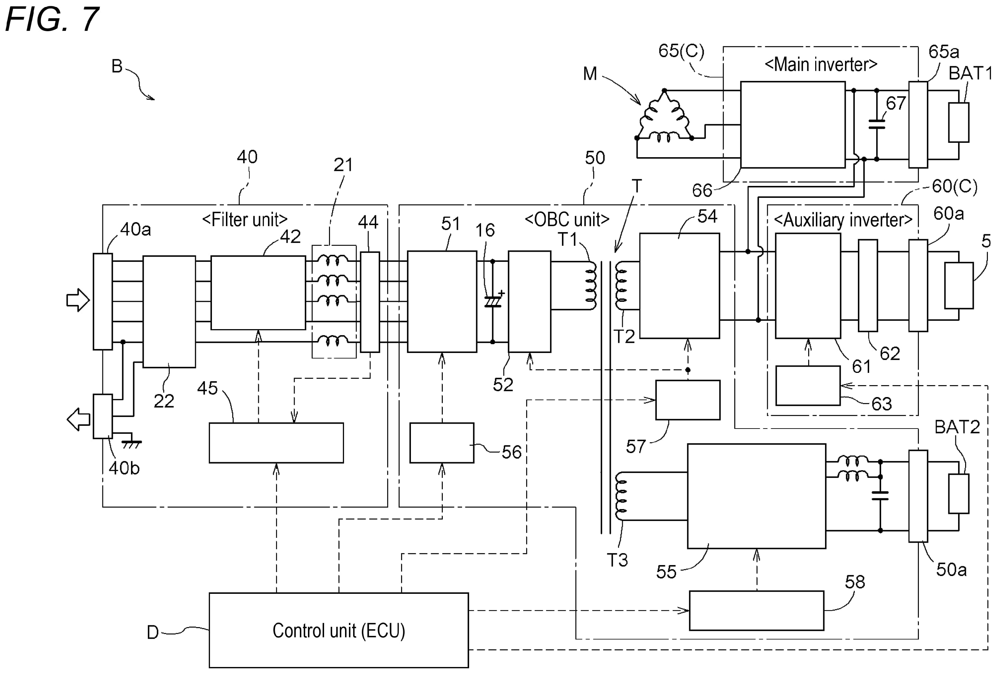

As illustrated in FIG. 7, the power conversion device B converts AC power from an AC power supply (basically, a commercial power supply) supplied from the outside of the vehicle into high-voltage DC power. Power thus converted into a high-voltage DC is charged in a main battery BAT1 (see FIG. 7) outside the vehicle drive device A.

The inverter C converts DC power from the main battery BAT1 into three-phase AC power and supplies the three-phase AC power with controlled frequency to the traveling motor M, thereby realizing traveling of the vehicle.

In addition, the power conversion device B generates AC power similar to the commercial power supply from the DC power from the main battery BAT1 by the power conversion device B and supplies the AC power to the outside of the vehicle. That is, in the present embodiment, the power conversion device B is provided in a vehicle with a power configuration similar to that of a plug-in hybrid electric vehicle (PHEV). Details of the power conversion circuit will be described later.

Note that, as illustrated in FIG. 1, the power conversion device B forms a plurality of layers in which a plurality of conversion modules (a first conversion module Ba, a second conversion module Bb, and a third conversion module Bc) are arranged in an overlapping manner in the vertical direction.

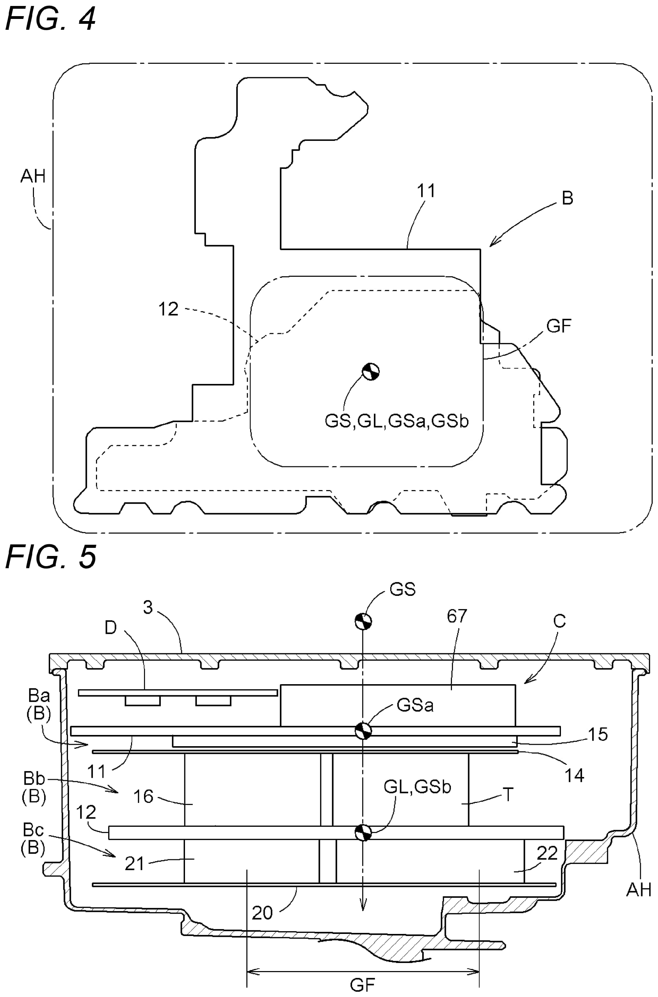

The power conversion device B sets a gravity center position (a gravity center height GL) in the vertical direction by relatively increasing the weight toward the lower side of the plurality of layers. In addition, the power conversion device B sets a gravity center position (a plane gravity center position GS, see FIG. 4) in plan view by arranging a plurality of electronic components. Therefore, the vehicle including the power conversion device B is not limited to a plug-in hybrid electric vehicle, and the power conversion device B can be provided in a hybrid electric vehicle (HEV), a battery electric vehicle (BEV), and a fuel cell electric vehicle (FCEV).

Note that the power conversion device B has a single center of gravity throughout the plurality of conversion modules Ba, Bb, and Bc including cooling plates 11 and 12 and the electronic components. The position of the center of gravity in the vertical direction is referred to as the gravity center height GL (see FIG. 5), and the position of the center of gravity in plan view is referred to as the plane gravity center position GS (see FIG. 4). Details of the gravity center position will be described later. In the present embodiment, the plane gravity center position GS of the power conversion device B is set at a position overlapping, in plan view, gravity center positions GSa and GSb of the cooling plates 11 and 12.

### [Vehicle Drive Device]

As illustrated in FIG. 1, the vehicle drive device A houses the traveling motor M and the gear mechanism Ge in a lower space LS of the housing AH, closes an outer portion of the traveling motor M in the lower space LS with a motor cover 1, and closes an outer portion of the gear mechanism Ge in the lower space LS with a gear cover 2.

The vehicle drive device A houses the power conversion device B and the inverter C in an upper space HS of the housing AH. The upper space HS is closed by an upper cover 3. Note that the lower space LS and the upper space HS are independent spaces that do not communicate with each other.

As illustrated in FIGS. 1 and 5, the power conversion device B includes a plurality of layers in which a plurality of conversion modules (the first conversion module Ba, the second conversion module Bb, and the third conversion module Bc) are arranged in a stacked state, and the inverter C is provided on an upper surface of the power conversion device B.

In the present embodiment, as described above, the power conversion device B and the inverter C are integrated to each other and housed in the housing AH of the vehicle drive device A. However, the power conversion device B may be separated from the inverter C. Furthermore, the vehicle drive device A is configured to house each of the power conversion device B and the inverter C therein, but at least one of the power conversion device B and the inverter C may be disposed on an outer wall surface of the housing AH of the vehicle drive device A or outside.

### [Layer Structure of Power Conversion Device]

As illustrated in FIG. 1, in the power conversion device B, the first conversion module Ba, the second conversion module Bb, and the third conversion module Bc are arranged in this order from the top to the bottom. In the power conversion device B, the first cooling plate 11 is disposed on the upper stage, the second cooling plate 12 is disposed below the first cooling plate with a set interval therebetween, and the first cooling plate 11 and the second cooling plate 12 are connected to each other via a spacer or the like to maintain the set interval.

As a specific arrangement, in the power conversion device B, the first conversion module Ba and the second conversion module Bb are arranged below the first cooling plate 11 and above the second cooling plate 12, and the third conversion module Bc is disposed below the second cooling plate 12. In addition, the inverter C is disposed on the first cooling plate 11. The cooling plates 11 and 12 (an example of a support member) support a plurality of electronic components constituting the conversion modules Ba, Bb, and Bc in the same layers.

The first conversion module Ba is mounted on the upper surface of an upper substrate 14 supported on the lower surface side of the first cooling plate 11, and includes a plurality of switching elements 15 (an example of an electronic component).

FIG. 1 illustrates the plurality of switching elements 15 as one block. The plurality of switching elements 15 are arranged in contact with or in proximity to the lower surface of the first cooling plate 11.

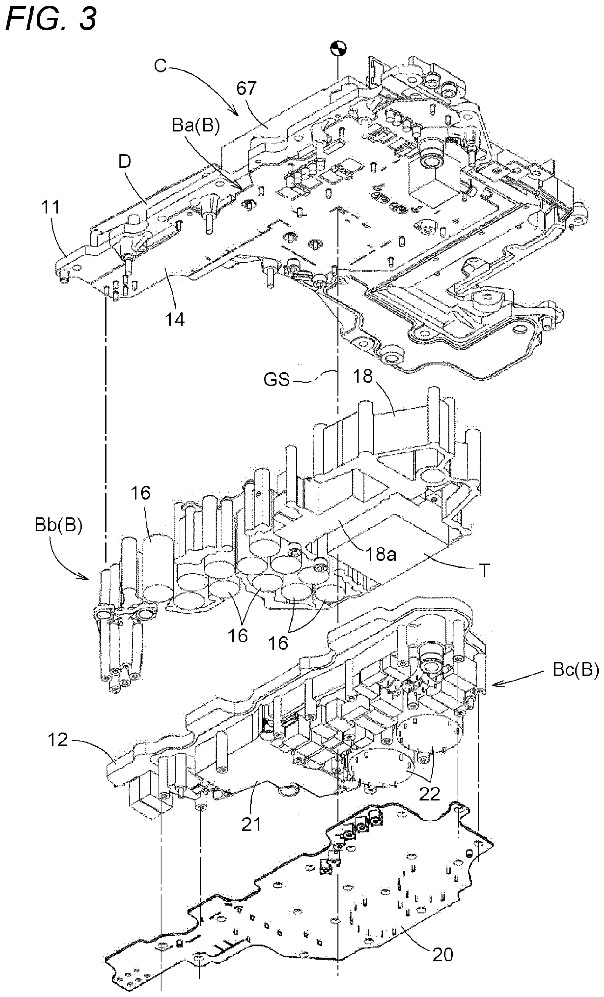

As illustrated in FIG. 3, the second conversion module Bb includes, on the lower surface of the upper substrate 14, a transformer T (an example of the electronic component), a plurality of bulk capacitors 16 (an example of the electronic component), and a frame member 18 that protrudes downward in a state of surrounding a part of the outer periphery of the transformer T to function as a spacer. Note that the plurality of bulk capacitors 16 and the transformer T are electronic components having a relatively larger weight than other electronic components arranged in the same layer, and furthermore, the transformer T has a larger weight than the bulk capacitor 16. The lower surfaces of the plurality of bulk capacitors 16 and the lower surface of the transformer T are arranged in contact with or in proximity to the upper surface of the second cooling plate 12.

As illustrated in FIGS. 1 and 3, the third conversion module Bc includes a coil module 21 (an example of the electronic component) and a plurality of AC filters 22 (an example of the electronic component/an example of a filter substrate) on the upper surface of a lower substrate 20 disposed to be separated downward from the lower surface side of the second cooling plate 12. The coil module 21 and the plurality of AC filters 22 are electronic components having a relatively larger weight than other electronic components arranged in the same layer, and furthermore, the AC filter 22 has a larger weight than the coil module 21.

The upper surface of the coil module 21 and the upper surfaces of the plurality of AC filters 22 are arranged in contact with or in proximity to the lower surface of the second cooling plate 12.

The gravity center positions and the like of the plurality of conversion modules (the first conversion module Ba, the second conversion module Bb, and the third conversion module Bc) will be described later.

### [Cooling Circuit]

The first cooling plate 11 and the second cooling plate 12 have flow paths through which a cooling fluid flows, and enable cooling of both the upper and lower surfaces by causing a coolant such as a long life coolant (LLC) containing ethylene glycol, propylene glycol, or the like and an insulating oil as a fluid to flow through the flow paths.

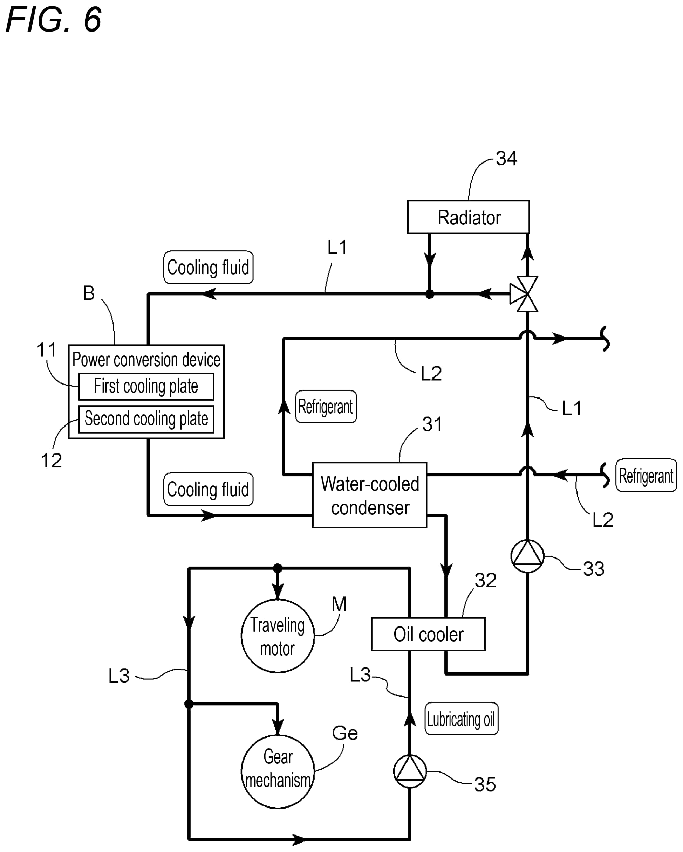

As illustrated in FIG. 6, the vehicle drive device A includes a cooling circuit including a coolant flow path L1 that circulates a cooling fluid, a refrigerant flow path L2 that circulates a refrigerant, and a lubricating oil flow path L3 that circulates a lubricating oil.

The coolant flow path L1 circulates the coolant in the order of the first cooling plate 11 and the second cooling plate 12 of the power conversion device B, a water-cooled condenser 31, an oil cooler 32, and a radiator 34 by driving a coolant pump 33.

The refrigerant flow path L2 is configured to supply a refrigerant to the water-cooled condenser 31. In the refrigerant flow path L2, hydrofluorocarbon (HFC), hydrofluoroolefin (HFO), or the like is used as the refrigerant.

The lubricating oil flow path L3 supplies a low-temperature lubricating oil to the inside of the traveling motor M and the gear mechanism Ge by driving a hydraulic pump 35.

In this cooling circuit, the coolant cooled by the radiator 34 flows into the first cooling plate 11 and the second cooling plate 12 of the power conversion device B, so that the coolant flows into the first conversion module Ba, the second conversion module Bb, and the third conversion module Bc, and the temperature increases by taking heat from the electronic components.

The coolant thus increased in temperature takes heat from the refrigerant in the water-cooled condenser 31, and is supplied to the oil cooler 32. As a result, the temperature of the lubricating oil flowing through the lubricating oil flow path L3 decreases, and the increase in temperature of the traveling motor M and the gear mechanism Ge in the lower space LS of the housing AH is suppressed.

Furthermore, the coolant having passed through the oil cooler 32 radiates heat in the radiator 34, so that the temperature of the coolant decreases and the coolant is supplied to the power conversion device B again.

### [Power Conversion Circuit]

FIG. 7 illustrates a power conversion circuit of the power conversion device B. As illustrated in FIG. 7, the power conversion circuit includes a filter unit 40, an on board charger (OBC) unit 50, an auxiliary inverter unit 60 (an example of the inverter C), a main inverter unit 65 (an example of the inverter C), and a control unit D.

### [Power Conversion Circuit: Filter Unit]

The filter unit 40 includes an input connector 40a, an output connector 40b, an AC filter 22, a relay module 42, the coil module 21, a current detection module 44, and an input and output control unit 45.

The coil module 21 and the plurality of AC filters 22 of the filter unit 40 are provided in the third conversion module Bc as illustrated in FIGS. 1, 3, and 5.

In addition, the input and output control unit 45 outputs a control signal to the relay module 42 and acquires a detection signal of the current detection module 44.

### [Power Conversion Circuit: OBC Unit]

As illustrated in FIG. 7, the OBC unit 50 includes the transformer T, a conversion circuit 51, a primary coil control circuit 52 that controls a primary coil T1 of the transformer T, the bulk capacitor 16 provided in a power system that transmits power from the conversion circuit 51 to the primary coil control circuit 52, a secondary coil control circuit 54 that controls a secondary coil T2 of the transformer T, and a tertiary coil control circuit 55 that obtains power from a tertiary coil T3 of the transformer T.

The OBC unit 50 includes a conversion circuit control unit 56, a transformer control unit 57, and a low-voltage control unit 58. The OBC unit 50 includes a low-voltage connector 50a that supplies power from the tertiary coil control circuit 55 to a low-voltage system battery BAT2.

In the OBC unit 50, in the first conversion module Ba, the plurality of switching elements 15 constituting parts of the conversion circuit 51, the primary coil control circuit 52, the secondary coil control circuit 54, and the like are mounted on the upper surface of the upper substrate 14.

Furthermore, as illustrated in FIGS. 1 and 3, the transformer T and the plurality of bulk capacitors 16 of the OBC unit 50 are mounted on the lower surface of the upper substrate 14 and provided in the second conversion module Bb. Note that the transformer T, the plurality of bulk capacitors 16, and elements related thereto may be provided on a substrate different from the upper substrate 14.

As illustrated in FIG. 7, the conversion circuit control unit 56 controls a plurality of switching elements of the conversion circuit 51. In addition, the transformer control unit 57 controls the primary coil control circuit 52 and the secondary coil control circuit 54. The low-voltage control unit 58 controls the tertiary coil control circuit 55.

### [Power Conversion Circuit: Auxiliary Inverter Unit]

As illustrated in FIG. 7, the auxiliary inverter unit 60 (an example of the inverter) functions as a DC-DC converter, and includes an auxiliary drive circuit 61, a DC filter 62, and an auxiliary control unit 63. The auxiliary inverter unit 60 includes a first high-voltage connector 60a.

The auxiliary drive circuit 61 includes a plurality of switching elements. The auxiliary control unit 63 controls the auxiliary drive circuit 61 to supply high-voltage power to an air conditioner 5 or the like as an auxiliary machine via the first high-voltage connector 60a.

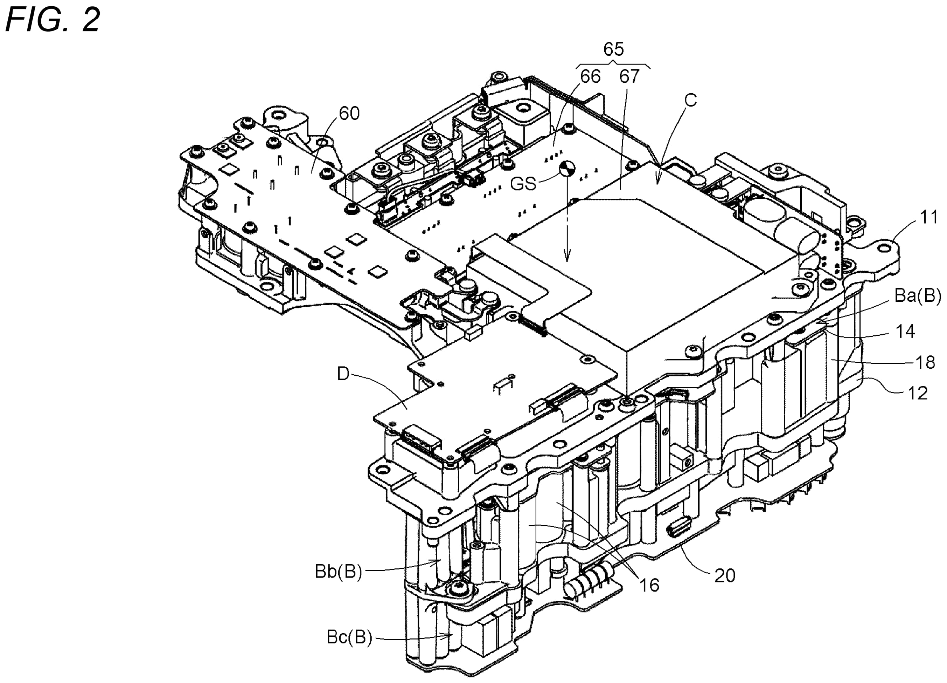

As illustrated in FIG. 2, the auxiliary inverter unit 60 is disposed above the first cooling plate 11 in a region protruding outward from the first cooling plate 11 in plan view.

### [Power Conversion Circuit: Main Inverter Unit]

As illustrated in FIG. 7, the main inverter unit 65 (an example of the inverter) includes a second high-voltage connector 65a, a motor drive circuit 66, and a smoothing capacitor 67. The motor drive circuit 66 includes a plurality of switching elements and supplies power to the traveling motor M.

As illustrated in FIG. 2, the smoothing capacitor 67 is disposed at a position overlapping the first cooling plate 11 from above. The motor drive circuit 66 is disposed at a position adjacent to the smoothing capacitor 67.

By high-voltage power flowing between the OBC unit 50 and the auxiliary inverter unit 60 being supplied, the main inverter unit 65 functions to supply the high-voltage power from the second high-voltage connector 65a to the main battery BAT1 thereby performing charging.

The main inverter unit 65 converts power from the main battery BAT1 into three-phase AC power in the motor drive circuit 66 and supplies the three-phase AC power with controlled frequency to the traveling motor M, thereby obtaining driving force that enables traveling of the vehicle from the traveling motor M.

### [Power Conversion Circuit: Control Unit]

As illustrated in FIG. 7, the control unit D outputs control signals to the input and output control unit 45, the conversion circuit control unit 56, the transformer control unit 57, the low-voltage control unit 58, and the auxiliary control unit 63.

As illustrated in FIG. 2, the control unit D is disposed at a position adjacent to the smoothing capacitor 67 and overlapping the first cooling plate 11 from above.

### [Power Conversion Circuit: Flow of Current]

Under the control of the relay module 42, the power conversion circuit converts AC power from an AC power supply (basically, a commercial power supply) supplied from the outside of the vehicle to the input connector 40a into a direct current in the conversion circuit 51, and applies an alternating current with a set frequency generated by the primary coil control circuit 52 to the primary coil side of the transformer T.

In addition, the high-voltage power output to the secondary coil side of the transformer T is taken out as high-voltage DC power in the secondary coil control circuit 54, and charged into the main battery BAT1 from the second high-voltage connector 65a.

The high-voltage DC power of the main battery BAT1 is converted into three-phase AC power by the motor drive circuit 66, and the three-phase AC power is supplied to the traveling motor M with controlled frequency, so that the traveling motor M is driven at a target rotation speed and thus traveling of the vehicle is realized. In addition, the high-voltage DC power from the main battery BAT1 is DC-DC converted by the auxiliary drive circuit 61, and supplied from first high-voltage connector 60a to the air conditioner 5 or the like.

On the other hand, the low-voltage power output to the tertiary coil side of the transformer T is charged as DC power by the tertiary coil control circuit 55 from the low-voltage connector 50a into the system battery BAT2. Note that the power charged into the system battery BAT2 in this manner is supplied to the control device of the vehicle body or the control equipment.

Furthermore, under the control of the relay module 42, the power conversion circuit sequentially supplies power from the main battery BAT1 to the secondary coil control circuit 54, the transformer T, the primary coil control circuit 52, and the like, thereby generating an AC power supply similar to a commercial power supply, and outputs the AC power supply from the output connector 40b.

### [Arrangement of Electronic Components and Like of Power Conversion Device]

As illustrated in FIGS. 1, 4, and 5, the power conversion device B is configured by respectively arranging a plurality of conversion modules (the first conversion module Ba, the second conversion module Bb, and the third conversion module Bc) on a plurality of (three in the present embodiment) layers overlapping in the vertical direction.

The power conversion device B includes a plurality of electronic components such that the weight becomes relatively larger toward the lower side of the plurality of layers. In addition, the power conversion device B includes these electronic components so as to arrange an electronic component having a relatively large weight among a plurality of electronic components in the same layer in a gravity center region GF in the lower layer. The gravity center region GF is a region centered on the respective gravity center positions GSa and GSb of the cooling plates 11 and 12 in plan view. Note that in the present embodiment, the gravity center position GSa of the first cooling plate 11 and the gravity center position GSb of the second cooling plate 12 overlap each other (are at the same position) in plan view.

As a specific arrangement, the AC filter 22 (an example of the filter substrate) and the coil module 21 are provided as electronic components having a relatively large weight in the lowermost layer (the third conversion module Bc) of the conversion module of the power conversion device B, and furthermore, the AC filter 22 has a relatively larger weight than the coil module 21. In addition, the transformer T and a plurality of bulk capacitors 16 are provided as electronic components having a relatively large weight in the second layer from the lowermost layer (the second conversion module Bb), and furthermore, the transformer T has a relatively larger weight than the bulk capacitors 16.

In the power conversion device B, the uppermost layer (the first conversion module Ba) including the plurality of switching elements 15 as electronic components is the lightest, and the weight increases in the order of the intermediate layer (the second conversion module Bb) and the lowermost layer (the third conversion module Bc). From such a tendency of weight, in the power conversion device B, the lowest layer is the heaviest, and the intermediate layer is the second heaviest. As a result, in the power conversion device B, the center of gravity is set at a position closest to the lowest side in the vertical direction, and the center of gravity in the vertical direction is stabilized.

The gravity center position of the power conversion device B, which is specified in the vertical direction as described above, is referred to as the gravity center height GL. In the present embodiment, the gravity center height GL is at the same position as the second cooling plate 12 in the vertical direction.

In the power conversion device B, as illustrated in FIGS. 4 and 5, the gravity center region GF, which is a region set in plan view, is set in the lowermost layer (the third conversion module Bc) and the second layer from the lowermost layer (the second conversion module Bb). The gravity center region GF is a region centered on the gravity center position GSb of the second cooling plate 12 in plan view.

In the gravity center region GF, the AC filter 22 (an example of the filter substrate), the coil module 21, the transformer T, and a plurality of bulk capacitors 16 are arranged as electronic components having a relatively large weight on the conversion modules (the second conversion module Bb and the third conversion module Bc). In particular, the weight balance is adjusted by arranging the AC filter 22 and the transformer T in the gravity center region GF.

In the present embodiment, the gravity center position of the power conversion device B, which is specified in plan view, is referred to as the plane gravity center position GS, and the gravity center positions of the cooling plates 11 and 12 are referred to as the gravity center positions GSa and GSb. In the present embodiment, the cooling plates 11 and 12 and the electronic components (the AC filter 22, the coil module 21, the transformer T, the bulk capacitor 16, and the like) are arranged in a manner the plane gravity center position GS of the power conversion device B and the gravity center positions GSa and GSb of the cooling plates 11 and 12 overlap each other in plan view. In addition, the plane gravity center position GS and the individual gravity center positions GSa and GSb are arranged in the vicinity of the center of the power conversion device B in plan view.

In the power conversion device B, each of the gravity center positions GSa and GSb of the cooling plates 11 and 12 is at one fixed position, and as illustrated in FIGS. 4 and 5, in the present embodiment, the gravity center height GL and the gravity center positions GSa and GSb of the cooling plates 11 and 12 overlap each other in the plan view. In addition, the plane gravity center position GS is at a position overlapping the gravity center positions GSa and GSb of the first cooling plate 11 and the second cooling plate 12 in plan view. In the second conversion module Bb of the present embodiment, a thick portion 18a is formed at a position at which the balance can be maintained at the plane gravity center position GS in the frame member 18, so that the plane gravity center position GS is set as an ideal position (in the present embodiment, a position that overlaps the gravity center positions GSa and GSb of the cooling plates 11 and 12 in plan view and yields the improvement in the balance of the entire power conversion device B). In the present embodiment, as illustrated in FIG. 3, the thick portion 18a is formed by increasing the thickness of the frame member 18 in the gravity center region GF more than the thickness of the frame member 18 other than the gravity center region GF. In other words, the thick portion 18a is formed by increasing the thickness of the frame member 18 on the periphery of the electronic component having a relatively large weight more than the thickness of the frame member 18 other than the periphery of the electronic component.

### [Operation and Effect of Embodiment]

The power conversion device B in which the plurality of conversion modules are stacked in this manner and the inverter C are integrated and housed in the upper space HS of the housing AH. As a result, the power conversion device B and the inverter C can be handled as an integrated unit.

In addition, the power conversion device B has a plurality of (three in the present embodiment) layers, and has a configuration in which the first conversion module Ba, the second conversion module Bb, and the third conversion module Bc are arranged in the respective layers. The power conversion device B relatively increases in weight toward the lower side of the plurality of layers. As a result, the gravity center position (the gravity center height GL) is set on the lower side in the vertical direction of the power conversion device B, and thus the stability of the vehicle body is improved.

Furthermore, in the power conversion device B of the present embodiment, the gravity center region GF in the lower layer is set to a region centered on the gravity center position GSb of the second cooling plate 12 in plan view, and a component having a relatively large weight is disposed in the gravity center region GF. As a result, the plane gravity center position GS overlaps the gravity center position GSb of the second cooling plate 12 in plan view and is disposed in the vicinity of the center of the power conversion device B, so that the power conversion device B realizes the improvement in balance in the width direction of the vehicle body.

The power conversion device B increases the thick portion 18a of the frame member 18 constituting a part of the conversion module in order to set the plane gravity center position GS. In this configuration, even in a case where there is a restriction on the arrangement of the electronic components on the substrate, the position of the plane gravity center position GS can be set inside the gravity center region GF due to the weight of the thick portion 18a. In the present embodiment, the frame member 18 functions as a spacer, and does not cause an increase in the number of components as compared with a configuration using a metal balancer, for example.

For example, in a case where a case that houses the power conversion device B is provided, it is also possible to function as the frame member 18 by increasing the thickness of a part of a wall portion of the case.

In addition, since the power conversion device B is cooled by the coolant flowing through the first cooling plate 11 and the second cooling plate 12, an excessive increase in temperature is not caused. Similarly, since the inverter C is cooled by the coolant flowing through the first cooling plate 11, the excessive increase in temperature is not caused.

### [Other Embodiments]

The present disclosure may be configured as follows in addition to the embodiment described above (those having the same functions as those of the embodiment are denoted by the same numbers and reference numerals as those of the embodiment).

(a) The above embodiment has described the example in which the gravity center position GSa of the first cooling plate 11 and the gravity center position GSb of the second cooling plate 12 overlap each other (are at the same position) in plan view in the power conversion device B. However, the gravity center position GSa of the first cooling plate 11 and the gravity center position GSb of the second cooling plate 12 need not overlap each other (may be at different positions) in plan view. In this case, the plane gravity center position GS may be set at a position not overlapping one or both of the two gravity center positions GSa and GSb in plan view.
(b) Instead of the configuration in which the power conversion device B and the inverter C are integrated and housed in the housing AH of the vehicle drive device A, a configuration may be adopted in which the power conversion device B and the inverter C are separated from each other as partially described in the embodiment. Furthermore, the vehicle drive device A is configured to house each of the power conversion device B and the inverter C therein, but at least one of the power conversion device B and the inverter C may be provided outside the housing AH of the vehicle drive device A.
(c) The conversion module is not limited to three layers, and may have two layers or four or more layers. In addition, it is not limited to the configuration in which the transformer T, the filter, and the like having a large weight are arranged at positions on the lowermost layer, and some of them may be arranged in a conversion module above the lowermost conversion module.
(d) Ideally, the lowest conversion module (the third conversion module Bc) among the plurality of conversion modules (the first conversion module Ba, the second conversion module Bb, and the third conversion module Bc) constituting the power conversion device B should be the heaviest. However, for example, the second conversion module Bb may be the heaviest.
(e) In a case where a cooling plate that cools a plurality of conversion modules is used, the cooling plate can be disposed so as to preferentially take heat from an electronic component having a large amount of heat generation. As described above, by using a cooling plate that takes only heat of a part of the plurality of electronic components, the cooling plate can be downsized.

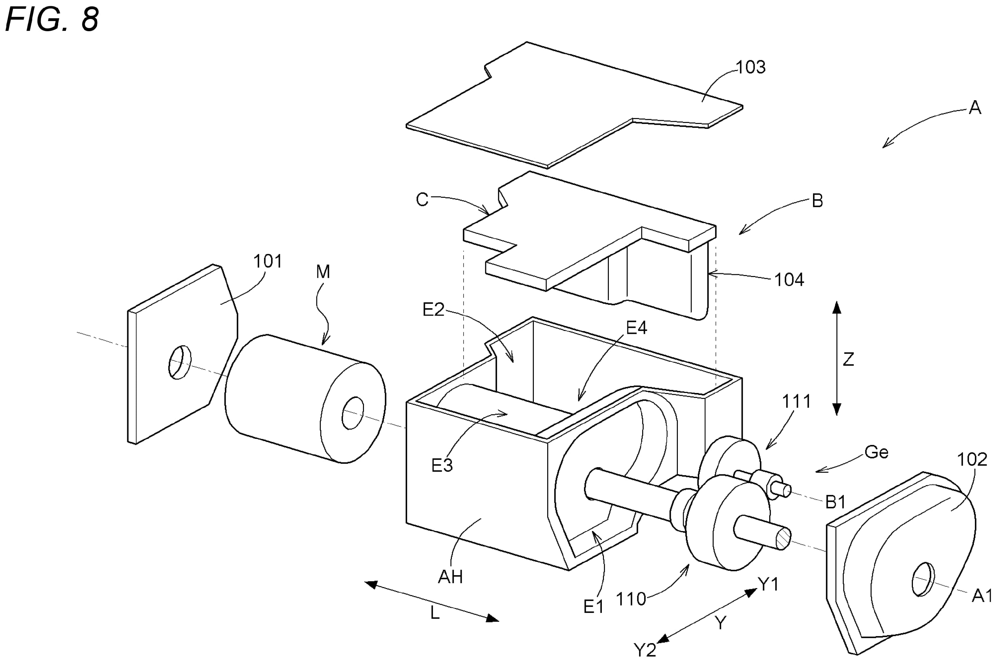

(f) FIG. 8 illustrates the vehicle drive device A that transmits the driving force of the traveling motor M to wheels (not illustrated) with respect to the housing AH. The vehicle drive device A houses the traveling motor M, the gear mechanism Ge that decelerates the driving force of the traveling motor M and transmits the driving force to driving wheels, the power conversion device B, and the inverter C in the housing AH.

The housing AH includes a first housing chamber E1 that houses the traveling motor M, and a second housing chamber E2 that houses the power conversion device B and the inverter C that control power supplied to the traveling motor M. The direction along an axis A1 of the traveling motor M is defined as an axial direction L, the direction orthogonal to the axis A1 as viewed in the vertical direction is defined as an axis orthogonal direction Y, and one side in the axis orthogonal direction Y is defined as a first side Y1 in the axis orthogonal direction.

In the housing AH, the portion in the first housing chamber E1 outside the traveling motor M is closed by a first cover 101, and the portion in the first housing chamber E1 outside the gear mechanism Ge is closed by a second cover 102. In addition, the upper opening of the housing AH is closed by an upper cover 103. As a result, the housing AH has a sealing structure.

The gear mechanism Ge includes a differential gear mechanism 110 disposed on the same axis as the axis A1 of the traveling motor M, and a counter gear mechanism 111 disposed on an offset axis B1 offset from the axis A1.

The second housing chamber E2 includes an upper region E3 that is a region above the traveling motor M and overlapping the traveling motor M as viewed in the vertical direction in a vehicle-mounted state mounted on the vehicle, and a side region E4 that is on the first side Y1 in the axis orthogonal direction with respect to the traveling motor M and does not overlap the traveling motor M as viewed in the vertical direction.

In the power conversion device B, the inverter C that controls power supplied to the traveling motor M is provided in the upper portion, at least a part of the inverter C is disposed in the upper region E3, and the conversion module 104 of the power conversion device B is disposed in a region extending downward from the inverter C in the side region E4.

That is, in another embodiment (e), in a case where the inverter C is in a horizontal posture as viewed in the direction along the axial direction L (side view), the power conversion device B extends in the vertical direction along the vertical direction Z, so that the inverter C and the power conversion device B are formed in an "inverted L" shape. As a result, the inverter C is disposed in the horizontal posture above the traveling motor M in a region extending in the axis orthogonal direction Y in the upper region E3 of the second housing chamber E2, and the power conversion device B is disposed in the side region E4 extending in the vertical direction in the second housing chamber E2.

In another embodiment (e), the side opposite to the first side Y1 in the axis orthogonal direction is referred to as a second side Y2 in the axis orthogonal direction, and either the first side Y1 in the axis orthogonal direction or the second side Y2 in the axis orthogonal direction may be the front side of the vehicle body.

Note that the configurations disclosed in the above embodiments (including another embodiment, and the same applies hereinafter) can be applied in combination with the configurations disclosed in other embodiments as long as there is no contradiction, and the embodiments disclosed in the present specification are examples, and the embodiments of the present disclosure are not limited thereto, and can be appropriately modified without departing from the object of the present disclosure.

In the embodiments described above, the following configurations are conceived.
(1) The power conversion device (B) provided in the vehicle drive device (A) that transmits driving force of the traveling motor (M) to a wheel includes a plurality of conversion modules (Ba, Bb, Bc) each of which is disposed in each of a plurality of layers overlapping each other in the vertical direction, and a plurality of the conversion modules (Ba, Bb, Bc) respectively arranged in the layers have a relatively larger weight from the layer on an upper side toward the layer on a lower side, and among a plurality of electronic components constituting the conversion module in the same layer, the electronic component having a relatively large weight is disposed in the gravity center region (GF) in the layer on the lower side.

According to this configuration, in the layers formed by the plurality of conversion modules (Ba, Bb, Bc), the weight is relatively larger toward the lower layer than the upper layer. Therefore, the center of gravity (the gravity center height GL) of the power conversion device (B) can be disposed at a lower position. In addition, in the conversion module (Bb, Bc) of the lower layer, an electronic component having a large weight is disposed in the gravity center region GF, and thus even if the lower layers are a plurality of conversion modules (Bb, Bc), the center of gravity (the plane gravity center position GS) can be set at any position in plan view by disposing the electronic component having a large weight in the gravity center region (GF).

(2) It is preferable that the power conversion device (B) of (1) include the support member (11, 12) that supports the plurality of electronic components constituting the conversion module in the same layer, and the gravity center region (GF) be a region centered on the gravity center position (GSa, GSb) of the support member (11, 12) in plan view.

With this configuration, since the plurality of electronic components constituting the conversion module can be arranged and supported near the gravity center position (GSa, GSb) of the support member (11,12), the power conversion device (B) can stably hold the plurality of electronic components.

(3) In the power conversion device B of (2), the support member (11, 12) is preferably the cooling plate (11, 12) that has a flow path through which a cooling fluid flows and can cool the electronic component.

With this configuration, since the plurality of electronic components constituting the conversion module (Ba, Bb, Bc) can be cooled by the support members (11,12), heat generation of the power conversion device (B) can be suppressed.

(4) It is preferable that the power conversion device (B) of any one of (1) to (3) include the housing (AH) that houses a plurality of the conversion modules (Ba, Bb, Bc) and has the frame member (18) supporting the conversion modules (Ba, Bb, Bc), and in the housing (AH), the thick portion (18a) obtained by increasing the thickness of the frame member (18) is preferably formed on a periphery of the electronic component having a relatively large weight.

With this configuration, for example, by increasing the weight of a part of the frame member (18) of the housing (AH) that houses the conversion module (Ba, Bb, Bc) or the weight of the portion of the thick portion (18a) obtained by increasing the thickness of the frame member (18) functioning as a spacer, it is possible to improve the balance with the center of the gravity center region (GF) as the gravity center position (the plane gravity center position GS) in plan view.

(5) It is preferable that the power conversion device (B) of any one of (1) to (3) include the housing (AH) that houses a plurality of the conversion modules (Ba. Bb. Bc) and has the frame member (18) supporting the conversion modules (Ba. Bb. Bc), and in the housing (AH), the thick portion (18a) obtained by increasing the thickness of the frame member (18) in the gravity center region (GF) more than the thickness of the frame member (18) other than the gravity center region (GF) is preferably formed on a periphery of the electronic component having a relatively large weight.

With this configuration, for example, by increasing the weight of the thick portion (18a) obtained by increasing the thickness of a portion located in the gravity center region (GF) in the frame member (18) of the housing (AH) that houses the conversion modules (Ba, Bb, Bc), it is possible to improve the balance with the center of the gravity center region (GF) as the gravity center position (the plane gravity center position GS) in plan view.

(6) In the power conversion device (B) of any one of (1) to (3), the electronic component having a relatively large weight in the layer on the lowermost side is preferably the filter substrate (the AC filter 22), and the electronic component having a relatively large weight in a second layer from the lowermost side is preferably the transformer (T).

With this configuration, the filter substrate (the AC filter 22) having a relatively large weight is provided in the lowermost layer of the layers formed by the conversion modules (Ba, Bb, Bc), and the transformer (T) is provided in the second layer from the lowermost layer, so that the weight of the lower portion of the power conversion device (B) can be made larger than the weight of the upper portion of the power conversion device (B), and the stability can be improved.

(7) In the power conversion device B of any one of (1) to (3), the inverter (C) that controls power supplied to the traveling motor is preferably disposed in the layer on an uppermost side.

With this configuration, the power conversion device (B) and the inverter (C) are integrated, and the power conversion device (B) and the inverter (C) can be handled as an integrated unit. In addition, by disposing the inverter (C) having a relatively large amount of heat generation on the upper side of the power conversion device (B), the action of heat of the inverter (C) on the power conversion device (B) can be suppressed.

(8) In the power conversion device (B) of (2), the electronic component having a largest weight among the plurality of electronic components constituting the conversion module (Ba, Bb, Bc) in the same layer is preferably disposed at a position overlapping the gravity center position (GSa, GSb) of the support member (11, 12) in plan view.

With this configuration, the electronic component having the largest weight among the plurality of electronic components constituting the conversion module in the same layer is disposed at the gravity center position (GSa, GSb) of the support member (11, 12) in the power conversion device (B), and thus the power conversion device (B) can stably hold the conversion module (Ba, Bb, Bc) by the support member (11, 12).

(9) In the power conversion device (B) of (8), the plurality of electronic components are preferably the transformer (T) and the bulk capacitor (16), and the electronic component having a largest weight is preferably the transformer (T).

With this configuration, the power conversion device (B) includes the transformer (T) and the bulk capacitor (16) as the plurality of electronic components, and the transformer (T), which is the electronic component having the largest weight, is disposed at the gravity center position (GSb) of the support member (12), so that the conversion module (Bb) can be stably held.

(10) In the power conversion device (B) of (8), the plurality of electronic components are preferably the filter substrate (22) and the coil module (21), and the electronic component having a largest weight is preferably the filter substrate (22).

With this configuration, the power conversion device (B) includes the filter substrate (22) and the coil module (21) as the plurality of electronic components, and the filter substrate (22), which is the electronic component having the largest weight, is disposed at the gravity center position (GSb) of the support member (12), so that the conversion module (Bc) can be stably held.

### (Supplements)

(11) The vehicle drive device (A) including the power conversion device of any one of (1) to (3) includes the housing (AH) including the first housing chamber (E1) that houses the traveling motor (M) and the second housing chamber (E2) that houses the power conversion device (B) that controls power supplied to the traveling motor (M), in which the direction along the axis (A1) of the traveling motor (M) is defined as the axial direction (L), the direction orthogonal to the axis (A1) as viewed in the vertical direction is defined as the axis orthogonal direction (Y), and one side in the axis orthogonal direction (Y) is defined as the first side (Y1) in the axis orthogonal direction, the second housing chamber (E2) includes the upper region (E3) that is a region above the traveling motor (M) and overlapping the traveling motor (M) as viewed in the vertical direction in a vehicle-mounted state mounted on the vehicle, and the side region (E4) that is on the first side (Y1) in the axis orthogonal direction with respect to the traveling motor (M) and does not overlap the traveling motor (M) as viewed in the vertical direction, the power conversion device (B) has the inverter (C) that controls power supplied to the traveling motor (M) in the upper portion, at least a part of the inverter (C) is disposed in the upper region (E3), and the power conversion device (B) is disposed in a region extending downward from the inverter (C) in the side region (E4).

According to this configuration, the inverter (C) included in the power conversion device (B) is disposed in the upper region (E3) above the traveling motor (M), and the power conversion device (B) is disposed in the side region (E4) not overlapping the traveling motor (M). This arrangement enables the arrangement of the inverter (C) and the power conversion device (B) by effectively utilizing the upper side of the traveling motor (M) and the side region (E4) adjacent to the traveling motor (M) in the axis orthogonal direction (Y).

(12) In the vehicle drive device (A) of (11), the power conversion device (B) preferably has a configuration in which a plurality of conversion modules (104) are stacked and arranged in the vertical direction in the side region (E4).

With this configuration, even the power conversion device (B) that is long in the vertical direction like the one with a configuration in which a plurality of conversion modules (104) are stacked can be housed in the housing (AH).

### INDUSTRIAL APPLICABILITY

The present invention can be used for a power conversion device.

### REFERENCE SIGNS LIST

A: Vehicle drive device, A1: Axis, AH: Housing, B: Power conversion device, M: Traveling motor, BAT1: Battery, Ba: First conversion module (conversion module), Bb: Second conversion module (conversion module), Bc: Third conversion module (conversion module), C: Inverter, E1: First housing chamber, E2: Second housing chamber, E3: Upper region, E4: Side region, GF: Gravity center region, GSa: Gravity center position, GSb: Gravity center position, L: Axial direction, T: Transformer, Y: Axis orthogonal direction, Y1: First side in the axis orthogonal direction, 11: First cooling plate (support member), 12: Second cooling plate (support member), 15: Switching element (electronic component), 16: Bulk capacitor (electronic component), 18: Frame member, 18a: Thick portion, 21: Coil module (electronic component), 22: AC filter (electronic component/filter substrate), and 104: Conversion module

## Claims

1. A power conversion device provided in a vehicle drive device that transmits driving force of a traveling motor to a wheel, the power conversion device comprising:
a plurality of conversion modules each of which is disposed in each of a plurality of layers overlapping each other in a vertical direction, wherein
a plurality of the conversion modules respectively arranged in the layers have a relatively larger weight from the layer on an upper side toward the layer on a lower side, and
among a plurality of electronic components constituting the conversion module in a same layer, the electronic component having a relatively large weight is disposed in a gravity center region in the layer on a lower side.

2. The power conversion device according to claim 1, comprising a support member that supports the plurality of electronic components constituting the conversion module in the same layer, and
the gravity center region is a region centered on a gravity center position of the support member in plan view.

3. The power conversion device according to claim 2, wherein the support member is a cooling plate that has a flow path through which a cooling fluid flows and can cool the electronic component.

4. The power conversion device according to any one of claims 1 to 3, comprising a housing that houses a plurality of the conversion modules and has a frame member supporting the conversion modules, wherein
in the housing, a thick portion obtained by increasing a thickness of the frame member is formed on a periphery of the electronic component having a relatively large weight.

5. The power conversion device according to any one of claims 1 to 3, comprising a housing that houses a plurality of the conversion modules and has a frame member supporting the conversion modules, wherein
in the housing, a thick portion obtained by increasing a thickness of the frame member in the gravity center region more than a thickness of the frame member other than the gravity center region is formed on a periphery of the electronic component having a relatively large weight.

6. The power conversion device according to any one of claims 1 to 3, wherein the electronic component having a relatively large weight in the layer on a lowermost side is a filter substrate, and the electronic component having a relatively large weight in a second layer from the lowermost side is a transformer.

7. The power conversion device according to any one of claims 1 to 3, wherein an inverter that controls power supplied to the traveling motor is disposed in the layer on an uppermost side.

8. The power conversion device according to claim 2, wherein the electronic component having a largest weight among the plurality of electronic components constituting the conversion module in the same layer is disposed at a position overlapping the gravity center position of the support member in plan view.

9. The power conversion device according to claim 8, wherein
the plurality of electronic components are a transformer and a bulk capacitor, and
the electronic component having a largest weight is the transformer.

10. The power conversion device according to claim 8, wherein
the plurality of electronic components are a filter substrate and a coil module, and
the electronic component having a largest weight is the filter substrate.
